# FASCICULE DE BREVET EUROPEEN

(11) **EP 1 474 298 B1**
(45) Date de publication et mention de la délivrance du brevet: **31.05.2006**
(21) Numéro de dépôt: 03704548.1
(22) Date de dépôt: 05.02.2003
(51) Int. Cl.: B60C 1/00, C08K 5/098, C08F 279/02

(54) **BANDE DE ROULEMENT POUR PNEUMATIQUE**
LAUFFLÄCHE FÜR REIFEN
RUNNING TREAD FOR TYRE

(30) Priorité: 07.02.2002 FR 0201658
(43) Date de publication de la demande: 10.11.2004
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: VASSEUR, DIDIER, F-63100 Clermont-Ferrand (FR)
(74) Mandataire: Ribière, Joel
(86) Numéro de dépôt international: PCT/EP2003/001125
(87) Numéro de publication internationale: WO 2003/066352

(56) Documents cités:
- EP-A- 1 101 794
- US-A- 4 192 790
- US-A- 5 126 501

## Description

La présente invention est relative aux bandes de roulement des pneumatiques et aux compositions de caoutchouc utilisées pour la fabrication de telles bandes de roulement.

Elle se rapporte plus particulièrement aux bandes de roulement des pneumatiques à faible résistance au roulement, renforcées majoritairement de charges inorganiques, ces bandes de roulement étant destinées en particulier à des pneumatiques équipant des véhicules tels que motos, voitures de tourisme, camionnettes ou Poids-lourd.

Depuis que les économies de carburant et la nécessité de protéger l'environnement sont devenues une priorité, il s'est avéré nécessaire de produire des pneumatiques ayant à la fois une résistance au roulement réduite et une résistance élevée à l'usure. Ceci a été rendu possible grâce notamment à la découverte de nouvelles compositions de caoutchouc renforcées de charges inorganiques spécifiques qualifiées de "renforçantes", capables de rivaliser, du point de vue renforçant, avec le noir de carbone conventionnel et offrant en outre à ces compositions une faible hystérèse, synonyme d'une plus basse résistance au roulement pour les bandes de roulement de pneumatiques les comportant. De telles compositions à base de charges inorganiques renforçantes du type siliceuses ou alumineuses ont par exemple été décrites dans les brevets ou demandes de brevet EP-A-0 501 227, EP-A-0 735 088, EP-A-0 . 810 258, EP-A-0 881 252, WO99/02590, WO99/02601, WO99/02602, WO99/28376, WO00/05300, WO00/05301, WO 01/96442, WO 02/30939, WO 02/31041, WO 02/083782.

Mais, idéalement, une bande de roulement de pneumatique doit obéir à d'autres exigences techniques, pour certaines antinomiques, posséder en particulier une adhérence élevée tant sur sol sec que sur sol mouillé, enneigé ou verglacé, tout en offrant au pneumatique un très bon niveau de comportement routier *("handling")* sur véhicule automobile, en particulier une poussée de dérive *("drift thrust"* ou *"cornering")* élevée.

Pour améliorer le comportement routier, on le sait, une rigidité supérieure de la bande de roulement est souhaitable, cette rigidification pouvant être obtenue par exemple en augmentant le taux de charge renforçante ou en incorporant certaines résines renforçantes dans les compositions de caoutchouc constitutives de ces bandes de roulement.

Toutefois, une telle rigidification de la bande de roulement, tout au moins pour sa partie superficielle qui est au contact du sol lors du roulage du pneumatique, pénalise de manière connue, le plus souvent de manière rédhibitoire, les propriétés d'adhérence sur un sol mouillé, enneigé ou verglacé.

C'est la raison pour laquelle, pour satisfaire à ces deux exigences contradictoires que sont comportement routier et adhérence, on a essentiellement proposé jusqu'ici d'utiliser des bandes de roulement composites (i.e., hybrides), formées par deux couches radialement superposées ("*cap-base structure*") de rigidités différentes, constituées de deux compositions de caoutchouc de formulations différentes : la couche radialement externe, au contact de la route, est constituée de la composition la plus souple, pour satisfaire aux exigences d'adhérence ; la couche radialement interne est constituée de la composition la plus rigide, pour satisfaire aux exigences de comportement routier.

Une telle solution présente toutefois de nombreux inconvénients :
tout d'abord, la fabrication d'une bande de roulement composite est par définition plus complexe et donc plus coûteuse que celle d'une bande de roulement conventionnelle, nécessitant en particulier l'emploi de machines complexes de coextrusion ;
   - lors de la fabrication, après découpe de la bande de roulement aux bonnes dimensions en sortie de boudineuse, il est de surcroît nécessaire de gérer des chutes de matériaux de natures différentes, ce qui augmente encore sensiblement les coûts de production ;
   - enfin, et ce n'est pas là le moindre inconvénient, une fois usée la partie radialement externe (souple) de la bande de roulement, c'est la partie initialement interne de la bande de roulement qui vient au contact de la route : on retrouve alors, bien entendu, les inconvénients d'une bande de roulement trop rigide, avec des performances non satisfaisantes du point de vue du compromis technique initialement visé.

Or, les Demanderesses ont découvert lors de leurs recherches qu'une composition de caoutchouc spécifique, à base d'un taux élevé de charge inorganique renforçante et d'un sel métallique d'acide carboxylique insaturé, permet d'obtenir, grâce à un phénomène inattendu "d'auto-accommodation", une bande de roulement présentant un véritable gradient de rigidité, radialement croissant de la surface vers l'intérieur de la bande de roulement. Ce gradient de rigidité est obtenu non seulement de manière simple et économique, mais encore pérenne, permettant ainsi de maintenir à un très haut niveau le compromis entre adhérence et comportement routier des pneumatiques, tout au long de la durée de vie de ces derniers.

En conséquence, un premier objet de l'invention concerne une bande de roulement de pneumatique comportant une composition de caoutchouc à base d'au moins (pce = parties en poids pour cent parties d'élastomère) :
- (i) un élastomère diénique ;
- (ii) plus de 50 pce d'une charge inorganique renforçante ;
- (iii) entre 2 et 15 pce d'un agent de couplage ;
- (iv) un sel métallique d'acide carboxylique insaturé.
   L'invention a également pour objet l'utilisation d'une telle bande de roulement pour la fabrication de pneumatiques neufs ou le rechapage de pneumatiques usagés. La bande de roulement conforme à l'invention est particulièrement adaptée aux pneumatiques destinés à équiper des véhicules de tourisme, véhicules 4x4 (à 4 roues motrices), motos, camionnettes, Poids-lourd (i.e., métro, bus, engins de transport routier, véhicules hors-la-route).

L'invention a également pour objet ces pneumatiques eux-mêmes lorsqu'ils comportent une bande de roulement conforme à l'invention. Elle concerne en particulier les pneumatiques du type "hiver" destinés aux routes enneigées ou verglacées.

L'invention a aussi pour objet un procédé pour préparer une bande de roulement de pneumatique présentant, après cuisson et rodage mécanique du pneumatique la comportant, un gradient de rigidité radialement croissant de la surface vers l'intérieur de la bande de roulement, ce procédé étant caractérisé en ce qu'il comporte les étapes suivantes :
- incorporer à un élastomère diénique, dans un mélangeur, au cours d'une première étape dite "non-productive" :
   - plus de 50 pce d'une charge inorganique renforçante ;
   - entre 2 et 15 pce d'un agent de couplage ;
   - un sel métallique d'acide carboxylique insaturé, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite, au cours d'une seconde étape dite "productive" :
   - un système de vulcanisation, auquel est de préférence associé
   - un initiateur radicalaire;
- malaxer le tout jusqu'à une température maximale inférieure à 120°C ;
- extruder ou calandrer la composition de caoutchouc ainsi obtenue, sous la forme d'une bande de roulement de pneumatique.

L'invention ainsi que ses avantages seront aisément compris à la lumière de la description et des exemples qui suivent.

### I. MESURES ET TESTS UTILISES

Les bandes de roulement et compositions de caoutchouc constitutives de ces bandes de roulement sont caractérisées ou testées comme indiqué ci-après.

### I-1. Dureté Shore A

La dureté Shore A des compositions après cuisson est appréciée conformément à la norme ASTM D 2240-86.

### I-2. Essais de traction

Les essais de traction permettent de déterminer les contraintes d'élasticité et les propriétés à la rupture, après cuisson. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (notés MA10).

On mesure aussi le module sécant nominal à 10% d'allongement, après une accommodation de 15% (i.e., une extension à 15% suivie d'un relâchement à 0%) au lieu de 10% comme précédemment pour le module MA10. Ce module dit "accommodé" est noté MA10_{Ac}. Toutes ces mesures de traction sont effectuées dans les conditions normales de température et d'hygrométrie (23±2°C et 50±5% d'humidité relative, selon norme française NF T 40-101 de décembre 1979).

### I-3. Accommodation mécanique

Par "accommodation mécanique", on entend un simple rodage du pneumatique par lequel sa bande de roulement est mise en contact avec le sol au cours d'un roulage, c'est-à-dire en conditions de travail, pendant quelques dizaines de secondes ou quelques minutes au plus. Cette opération de rodage peut être conduite sur une machine de roulage automatique ou directement sur un véhicule automobile ; elle peut être réalisée de différentes manières, par exemple par un simple roulage en ligne droite de quelques dizaines ou centaines de mètres, par un freinage longitudinal ou encore par une mise en dérive du pneumatique (virages), l'essentiel étant de commencer à faire "travailler" la bande de roulement dans des conditions d'usage normales.

A titre d'exemple, une telle accommodation mécanique peut être réalisée par un rodage dit "standard" consistant en un simple roulage en ligne droite sur une longueur de 400 mètres à une vitesse de 60 km/h, sur un véhicule automobile déterminé, sans dérive ni carrossage imposé au pneumatique, suivi d'un freinage longitudinal modéré (distance de freinage de 30 à 40 mètres) pour stopper le véhicule. Ce rodage standard est en outre réalisé sous des conditions normales de pression (celles préconisées par le constructeur du véhicule utilisé) et de charge (1 seule personne à bord du véhicule).

### II. DESCRIPTION DETAILLEE DE L'INVENTION

Les bandes de roulement selon l'invention sont formées, au moins en partie, d'une composition de caoutchouc à base d'au moins : (i) un (au moins un) élastomère diénique ; (ii) une quantité minimale (plus de 50 ce) d'une (au moins une) charge inorganique à titre de charge renforçante ; (iii) un (au moins un) agent de couplage (entre 2 et 15 pce) assurant la liaison entre la charge inorganique renforçante et cet élastomère diénique ; (iv) un (au moins un) sel métallique d'acide carboxylique insaturé auquel peut être associé (v) un (au moins un) initiateur radicalaire.

Bien entendu, par l'expression composition "à base de", il faut entendre une composition comportant le mélange et/ou le produit de réaction *in situ* des différents constituants utilisés, certains de ces constituants de base (par exemple l'agent de couplage, le sel métallique d'acide carboxylique et l'initiateur radicalaire si présent) étant susceptibles de, ou destinés à réagir entre eux, au moins en partie, lors des différentes phases de fabrication des bandes de roulement, en particulier au cours de leur vulcanisation ou cuisson.

Dans la présente description, sauf indication expresse différente, tous les pourcentages (%) indiqués sont des % en masse.

### II-1. Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non). Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement v insaturé" un élastomère diénique ayant un taux de motifs d'origine diénique (diènes conjugués) qui est supérieur à 50%.

Ces définitions générales étant données, l'homme du métier du pneumatique comprendra que la présente invention est en premier lieu mise en oeuvre avec des élastomères diéniques fortement insaturés, en particulier avec :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di-alkyl(C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para- méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon norme ASTM D3418-82) de - 40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition utilisée dans la bande de roulement conforme à l'invention est choisi dans le groupe des élastomères diéniques fortement insaturés constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Là bande de roulement conforme à l'invention est préférentiellement destinée à un pneumatique pour véhicule tourisme. Dans un tel cas, l'élastomère diénique est de préférence un copolymère SBR, en particulier un SBR préparé en solution, utilisé de préférence en mélange avec un polybutadiène ; plus préférentiellement, le SBR a une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, et le polybutadiène possède plus de 90% de liaisons cis-1,4.

Les compositions des bandes de roulement de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante

Par "charge inorganique renforçante", on entend de manière connue toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique (pour bande de roulement).

Préférentiellement, la charge inorganique renforçante est une charge du type siliceuse (par exemple silice) ou alumineuse (par exemple alumine), ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm, telle que décrite dans la demande EP-A-0 810 258 précitée. Comme exemples de telles alumines renforçantes, on peut citer notamment les alumines "Baikalox" "A125" ou "CR125" (société Baïkowski), "APA-100RDX" (société Condea); "Aluminoxid C" (société Degussa) ou "AKP-G015" (Sumitomo Chemicals). On peut aussi mettre en oeuvre l'invention en utilisant comme charge inorganique renforçante les (oxyde)hydroxydes d'aluminium spécifiques tels que décrits dans WO99/28376.

L'état physique sous lequel peut se présenter la charge inorganique renforçante est indifférent, que ce soit sous forme de poudre, de microperles, de granulés, de pellets, de billes ou toute autre forme densifiée appropriée.

Bien entendu on entend également par charge inorganique renforçante des mélanges de différentes charges inorganiques renforçantes, en particulier de charges siliceuses et/ou alumineuses hautement dispersibles telles que décrites ci-dessus.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 250 m²/g, plus préférentiellement comprise entre 80 et 230 m²/g.

La charge inorganique utilisée à titre de charge renforçante doit être présente à un taux élevé, supérieur à 50 pce, de préférence supérieur à 60 pce, ce qui est une des caractéristiques essentielles de l'invention, cette charge inorganique renforçante pouvant constituer la totalité ou la majorité de la charge renforçante totale, dans ce dernier cas associée par exemple à une quantité de noir de carbone minoritaire (de préférence inférieure à 20 pce, plus préférentiellement inférieure à 15 pce).

L'homme du métier comprendra aisément que le taux optimal sera différent selon la nature de la charge inorganique renforçante utilisée et selon le type de pneumatique concerné, par exemple pneumatique pour moto, pour véhicule de tourisme ou encore pour véhicule utilitaire tel que camionnette ou Poids lourd. De manière préférentielle, le taux de charge inorganique renforçante est compris entre 60 et 120 pce, plus préférentiellement encore entre 70 et 110 pce environ, par exemple dans un domaine de 80 à 105 pce dans le cas particulier de bandes de roulement pour pneumatiques tourisme.

De préférence, dans la bande de roulement conforme à l'invention, la charge inorganique renforçante constitue plus de 80% en poids de la charge renforçante totale, plus préférentiellement plus de 90% en poids (voire la totalité) de cette charge renforçante totale. On pourra toutefois, sans affecter de manière notable l'effet technique visé, utiliser une faible quantité de noir de carbone, de préférence inférieure à 20%, plus préférentiellement encore inférieure à 10% en poids par rapport à la quantité de charge renforçante totale.

Le noir de carbone, s'il est utilisé, est de préférence présent à un taux compris entre 2 et 15 pce, plus préférentiellement entre 4 et 12 pce. Il est notamment utilisable comme simple agent de pigmentation noir, ou encore pour protéger la bande de roulement de différentes sources de vieillissement atmosphérique tel que ozone, oxydation, rayonnement UV. On sait d'autre part que certains additifs de caoutchouterie, en particulier certains agents de couplage, sont disponibles sous une forme supportée par du noir de carbone, l'utilisation de tels additifs impliquant donc l'incorporation, en faible proportion, de noir de carbone. Comme noirs de carbone conviennent tous les noirs de carbone, notamment les noirs du type HAF, ISAF, SAF, conventionnellement utilisés dans les pneumatiques et particulièrement dans les bandes de roulement de ces pneumatiques ; à titre d'exemples non limitatifs de tels noirs, on peut citer les noirs N115, N134, N234, N339, N347, N375.

Dans le présent exposé, la surface spécifique ("aire massique") BET est déterminée de manière connue, par adsorption de gaz à l'aide de la méthode de Brunauer-Emmett-Teller décrite dans *"The Journal of the American Chemical Society"* Vol. 60, page 309, février 1938, plus précisément selon la norme française NF ISO 9277 de décembre 1996 [méthode volumétrique multipoints (5 points) - gaz: azote - dégazage: 1 heure à 160°C - domaine de pression relative *p*/*po* : 0.05 à 0.17]. La surface spécifique CTAB est la surface externe déterminée selon la norme française NF-T 45-007 de novembre 1987 (méthode B). Enfin, à titre de charge équivalente d'une telle charge inorganique renforçante, pourrait être utilisée une charge renforçante du type organique, notamment un noir de carbone, recouvert au moins en partie d'une couche inorganique (par exemple, une couche de silice), nécessitant quant à elle l'utilisation d'un agent de couplage pour assurer la liaison avec l'élastomère.

### II-3. Agent de couplage

De manière connue, en présence d'une charge inorganique renforçante, il est nécessaire d'utiliser un agent de couplage ou agent de liaison dont la fonction est d'assurer une connexion suffisante, de nature chimique et/ou physique, entre la charge inorganique (surface de ses particules) et l'élastomère diénique.

Un tel agent de couplage, par conséquent au moins bifonctionnel, a par exemple comme formule générale simplifiée "Y-T-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère diénique, par exemple par l'intermédiaire d'un atome de soufre ;
- T représente un groupe divalent permettant de relier Y et X.

Les agents de couplage ne doivent en particulier pas être confondus avec de simples agents de recouvrement de charge inorganique qui de manière connue peuvent comporter la fonction Y active vis-à-vis de la charge inorganique mais sont dépourvus de la fonction X active vis-à-vis de l'élastomère.

Des agents de couplage (silice/élastomère diénique), d'efficacité variable, ont été décrits dans un très grand nombre de documents et sont bien connus de l'homme du métier. On peut utiliser tout agent de couplage susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X et Y.

On utilise notamment des silanes polysulfurés, dits "symétriques" ou "asymétriques" selon leur structure particulière, tels que décrits par exemple dans les brevets ou demandes de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357, WO 02/083782.

Conviennent en particulier pour la mise en oeuvre de l'invention, sans que la définition ci-après soit limitative, des silanes polysulfurés dits "symétriques" répondant à la formule générale (I) suivante:
(I) Z-A-Sₙ-A-Z, dans laquelle:
   - n est un entier de 2 à 8 (de préférence de 2 à 5) ;
   - A est un radical hydrocarboné divalent (de préférence des groupements alkylène en C₁-C₁₈ ou des groupements arylène en C₆-C_{12;} plus particulièrement des alkylènes en C₁-C₁₀, notamment en C₁-C₄, en particulier le propylène) ;
   - Z répond à l'une des formules ci-après: 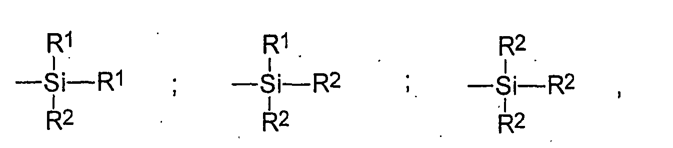
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)Silylalkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂·

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme agent de couplage avantageux les polysulfures (notamment disulfures, trisulfures ou tétrasulfures) de bis-(monoalkoxyl(C₁-C₄)-dialkyl(C₁₋C₄)silylpropyl), plus particulièrement le tétrasulfure de bis-monoéthoxydiméthylsilylpropyl tel que décrit dans la demande WO 02/083782 précitée.

A titre d'exemples d'agents de couplage autres que les alkoxysilanes polysulfurés précités, on citera notamment des polyorganosiloxanes bifonctionnels tels que décrits par exemple dans les demandes WO99/02602 ou WO 01/96442 précitées, ou encore les polysulfures d'hydroxysilane tels que décrits dans les demandes WO 02/30939 et WO 02/31041 précitées.

Dans les bandes de roulement conformes à l'invention, la teneur en agent de couplage est préférentiellement comprise entre 4 et 12 pce, plus préférentiellement entre 3 et 8 pce. Mais il est en général souhaitable d'en utiliser le moins possible. Par rapport au poids de charge inorganique renforçante, le taux d'agent de couplage représente typiquement entre 0,5 et 15% en poids par rapport à la quantité de charge inorganique renforçante. Dans le cas par exemple de bandes de roulement de pneumatiques pour véhicules tourisme, l'agent de couplage est utilisé à un taux préférentiel inférieur à 12%, voire même inférieur à 10% en poids par rapport à cette quantité de charge inorganique renforçante.

L'agent de couplage pourrait être préalablement greffé (via la fonction "X") sur l'élastomère diénique de la composition de l'invention, l'élastomère ainsi fonctionnalisé ou "précouplé" comportant alors la fonction "Y" libre pour la charge inorganique renforçante. L'agent de couplage pourrait également être préalablement greffé (via la fonction "Y") sur la charge inorganique renforçante, la charge ainsi "précouplée" pouvant ensuite être liée à l'élastomère diénique par l'intermédiaire de la fonction libre "X". On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

A l'agent de couplage peut être éventuellement associé un "activateur de couplage" approprié, c'est-à-dire un corps (composé unique ou association de composés) qui, mélangé avec cet agent de couplage, augmente l'efficacité de ce dernier. Des activateurs de couplage d'alkoxysilanes polysulfurés ont par exemple été décrits dans les demandes internationales WO00/05300 et WO00/05301 précitées, consistant en l'association d'une guanidine substituée, en particulier la N,N'-diphénylguanidine (en abrégé "DPG"), avec une énamine ou un dithiophospate de zinc. La présence de ces activateurs de couplage permettra par exemple de maintenir le taux d'agent de couplage à un niveau préférentiel inférieur à 10%, voire même inférieur à 8% en poids par rapport à la quantité de charge inorganique renforçante, ou encore de réduire le taux de charge inorganique renforçante en raison du couplage amélioré avec l'élastomère diénique.

### II-4. Sel métallique d'acide carboxylique insaturé

Les compositions de caoutchouc des bandes de roulement de l'invention contiennent au moins un sel métallique d'acide carboxylique insaturé destiné à former *in situ,* après cuisson (vulcanisation) de la bande de roulement, un réseau résine tridimensionnel qui vient se superposer, s'interpénétrer avec le réseau (charge inorganique/élastomère) d'une part, avec le réseau (élastomère/soufre) d'autre part (si l'agent de réticulation est le soufre).

Les sels métalliques d'acides carboxyliques insaturés, en particulier les (méth)acrylates de zinc, associés ou non à un initiateur radicalaire tel qu'un peroxyde organique, sont bien connus de l'homme du métier pour leur capacité à former, par polycondensation de leurs doubles liaisons carboxyliques, un réseau résine renforçant tridimensionnel (ci-après "réseau acrylate" dans le cas d'un acide du type acrylique) lors d'une opération de cuisson de la matrice de caoutchouc. Ils ont été utilisés dans des compositions de caoutchouc, notamment pour pneumatiques, à des taux très variables pouvant varier par exemple entre 0,1 et 50 pce, pour des applications aussi variées qu'adhésion ou renforcement (voir par exemple EP-A-0 420 449, EP-A-0 552 620, GB-A-2.042.553, US-A-3.344.105, US-A-3.522.223, US-A-3.823.122, US-A-4.082.288, US-A-4.191.671, US-A-4.495.326, US-A-4.529.770, US-A-4.529.770, US-A-4.720.526, US-A-4.987.192, US-A-5.217.807, US-A-6.153.686, US-A-6.051.653, US-A-6.251.977, demandes japonaises publiées sous les Nos JP1975/154386, JP1993/051491, JP1994/278357, JP1994/287358, JP1996/134270, JP1996/269241).

US-A-5 126 501 et US-A-4 192 790 ont été cités dans le rapport de recherche internationale. US-A-5 126 501 décrit une composition de caoutchouc destinée à enrober des câbles d'acier dans des ceintures de pneumatique, donc dans une partie du pneumatique très différente de la bande de roulement. Quant à US-A-4 192 790, il décrit une composition à base d'une charge inorganique telle que silice présentant une viscosité réduite grâce à l'ajout de méthacrylate de zinc, sans mentionner une quelconque application dans le domaine du pneumatique, a fortiori dans une bande de roulement de pneumatique.

Toutefois, à la connaissance des Demanderesses, aucun document de l'état de la technique ne décrit l'utilisation en bande de roulement de pneumatique de sels métalliques d'acides carboxyliques insaturés, en particulier de (méth)acrylates de zinc, associés ou non à un initiateur radicalaire tel qu'un peroxyde organique, en combinaison avec un taux aussi élevé (plus de 50 pce, de préférence plus de 60 pce) d'une charge inorganique renforçante telle que silice. Les connaissances de l'homme du métier, accumulées essentiellement dans le domaine des compositions de caoutchouc chargées majoritairement de noir de carbone, l'éloignaient au contraire d'une telle utilisation, en raison d'un pouvoir rigidifiant, pour ce type de sels métalliques, jugé rédhibitoire vis-à-vis des propriétés d'adhérence mentionnées supra.

L'acide carboxylique insaturé appartient préférentiellement au groupe constitué par l'acide acrylique, l'acide éthacrylique, l'acide méthacrylique, l'acide cinnamique, l'acide crotonique, l'acide maléique, l'acide fumarique, l'acide itaconique et les mélanges de ces acides. On utilise plus particulièrement l'acide acrylique ou l'acide méthacrylique.

Le métal du sel métallique est de préférence choisi dans le groupe préférentiel constitué par Al, Ca, Mg, Cr, Mn, Fe, Co, Ni, Zn, plus préférentiellement parmi Al, Mg et Zn. On utilise encore plus préférentiellement le zinc.

Des sels de zinc d'acides acryliques utilisables ont par exemple été décrits dans *"New metallic coagents for curing elastomers",* Sartomer Application Bulletin, April 1998 (Sartomer Co., Inc.). Le sel métallique préférentiellement utilisé est un (di)(méth)acrylate de zinc, c'est-à-dire un sel choisi parmi acrylate de zinc, di-acrylate de zinc, méthacrylate de zinc, diméthacrylate de zinc et les mélanges de ces acrylates. On utilise plus préférentiellement le di-acrylate de zinc (ci-après, en abrégé "ZDA") ou le diméthacrylate de zinc (ci-après, en abrégé "ZDMA").

Le sel métallique d'acide carboxylique insaturé doit être apte à se disperser parfaitement dans la matrice de caoutchouc, en même temps que la charge inorganique renforçante et son agent de couplage. A titre d'exemples de produits commerciaux utilisables, on citera par exemple ceux de la société Sartomer commercialisés sous les désignations "Saret 633" (ZDA) ou "Saret 634" (ZDMA).

La quantité de sel métallique peut varier dans une large mesure en fonction de la nature de l'élastomère diénique utilisé, de la quantité de charge inorganique renforçante, dans un domaine compris entre 0,1 et 50 pce. Cette quantité est plus préférentiellement comprise entre 1 et 25 pce. En dessous des minima indiqués, l'effet technique visé risque d'être insuffisant, alors qu'au delà des maxima indiqués, on s'expose à des risques de rigidification trop élevée et de pénalisation excessive de l'hystérèse. Une quantité comprise dans un domaine de 5 à 20 pce s'est révélée bien adaptée, notamment dans le cas de bandes de roulement pour pneumatiques tourisme.

### II-5. Initiateur radicalaire

Au sel métallique d'acide carboxylique insaturé précédemment décrit, est de préférence associé un générateur de radicaux libres ou initiateur radicalaire, appelé communément "agent de co-réticulation", qui de manière connue permet d'activer la formation du réseau résine acrylate grâce à la génération *in situ* de radicaux libres, suite à une activation énergétique.

On utilise avantageusement un initiateur du type à amorçage thermique, c'est-à-dire que l'apport d'énergie, pour la création des radicaux libres, se fait sous forme thermique. On choisit de préférence un initiateur radicalaire dont la température de décomposition est inférieure à 180°C, plus préférentiellement inférieure à 160°C, de telles gammes de températures permettant de bénéficier pleinement de l'effet d'activation, lors de la fabrication (malaxage) des compositions de caoutchouc.

Cet initiateur radicalaire à amorçage thermique est choisi dans le groupe préférentiel constitué par les peroxydes, les hydroperoxydes, les composés azido, les composés bis(azo) et les mélanges de ces composés, plus préférentiellement dans le groupe constitué par les (hydro)peroxydes, les composés bis(azo) et les mélanges de ces composés.

A titre d'exemples, on citera notamment le peroxyde de benzoyle, le peroxyde d'acétyle, le peroxyde de lauryle, le peroxyde de cumyle, le peroxyde de t-butyle, le peracétate de t-butyle, l'hydroperoxyde de t-butyle, l'hydroperoxyde de cumène, le peroxyde de t-butyl cumyle, le peroxyde de 2,5-diméthyl-2,5-bis(t-butyl) 3-hexyne, le peroxyde de 1,3-bis (t-butyl-isopropyl) benzène, le peroxyde de 2,4-dichlorobenzoyle, le perbenzoate de t-butyle, le peroxyde de 1,1 bis(t-butyl)3,3,5-triméthylcyclohexane, le 1,1'-azobis(isobutyronitrile), le 1,1'-azobis-(secpentylnitrile), le 1,1'-azobis(cyclohexanecarbonitrile).

La quantité d'initiateur radicalaire est comprise entre 0,05 et 10 pce, de préférence entre 0,1 et 5 pce. En dessous des minima indiqués, l'effet d'activation risque d'être insuffisant, alors qu'au delà des maxima indiqués, on s'expose à des risques de pénalisation de la mise en oeuvre à l'état cru (grillage ou réticulation prématurée) ou de rigidification excessive des compositions. Pour toutes ces raisons, une quantité comprise dans un domaine de 0,2 à 2,5 pce est plus préférentiellement choisie.

Le taux d'initiateur radicalaire, dans les fourchettes indiquées supra, est de préférence ajustée de manière à représenter moins de 30%, plus préférentiellement moins de 20% en poids par rapport à la quantité de sel métallique d'acide carboxylique, par exemple entre 1 % et 10%.

### II-6. Additifs divers

Bien entendu, les compositions de caoutchouc des bandes de roulement conformes à l'invention comportent également tout ou partie des additifs habituellement utilisés dans les compositions de caoutchouc diénique réticulables au soufre et destinées à la fabrication de bandes de roulement, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension. A la charge inorganique renforçante peut être également associée, si besoin est, une charge blanche conventionnelle non renforçante, comme par exemple des particules d'argile, de bentonite, talc, craie, kaolin, d'oxydes de titane.

Les compositions de caoutchouc des bandes de roulement de l'invention peuvent également contenir, en complément des agents de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents, utilisés à un taux préférentiel compris entre 0,5 et 3 pce, étant par exemple des alkylalkoxysilanes (notamment des alkyltriéthoxysilanes), des polyols, des polyéthers (par exemple des polyéthylèneglycols), des amines primaires, secondaires ou tertiaires, des polyorganosiloxanes hydroxylés ou hydrolysables, par exemple des α,ω-dihydroxy-polyorganosiloxanes (notamment des α,ω-dihydroxypolydiméthyl-siloxanes).

### II-7. Fabrication des bandes de roulement

Les compositions de caoutchouc des bandes de roulement de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Le procédé conforme à l'invention, pour préparer une bande de roulement de pneumatique présentant, après cuisson et rodage mécanique du pneumatique auquel elle est destinée, un gradient de rigidité radialement croissant de la surface vers l'intérieur de la bande de roulement, comporte les étapes suivantes :
- incorporer à un élastomère diénique, dans un mélangeur, au cours d'une première étape dite "non-productive" :
   - plus de 50 pce d'une charge inorganique renforçante ;
   - entre 2 et 15 pce d'un agent de couplage ;
   - un sel métallique d'acide carboxylique insaturé, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite, au cours d'une seconde étape dite "productive" :
   - un système de vulcanisation, auquel est de préférence associé
   - un initiateur radicalaire ;
- malaxer le tout jusqu'à une température maximale inférieure à 120°C ;
- extruder ou calandrer la composition de caoutchouc ainsi obtenue, sous la forme d'une bande de roulement de pneumatique.

Selon un mode préférentiel, tous les constituants de base des compositions des bandes de roulement conformes à l'invention, à l'exception du système de vulcanisation et de l'éventuel initiateur radicalaire, à savoir la charge inorganique renforçante, l'agent de couplage et le sel métallique d'acide carboxylique sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C. Mais tout ou partie du sel métallique d'acide carboxylique pourrait être aussi incorporé au cours de la phase productive.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation et de l'initiateur radicalaire. Une seconde étape de travail thermomécanique pourrait être éventuellement ajoutée, dans ce mélangeur interne, par exemple après une étape de refroidissement intermédiaire (de préférence à une température inférieure à 100°C), dans le but de faire subir aux compositions un traitement thermique complémentaire, notamment pour améliorer la dispersion, dans la matrice élastomérique, de la charge inorganique renforçante, de l'agent de couplage et du sel métallique d'acide carboxylique.

Après refroidissement du mélange ainsi obtenu à l'issue de la première phase non-productive, on incorpore alors à basse température le système de vulcanisation et l'initiateur radicalaire, dans un mélangeur externe tel qu'un mélangeur à cylindres. Le tout est alors mélangé (phase productive) pendant quelques minutes, par exemple entre 5 et 15 minutes.

Le système de vulcanisation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine). Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme bande de roulement de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté, de la cinétique de vulcanisation de la composition considérée et de la taille du pneumatique considéré.

Pour résumer, dans le procédé conforme à l'invention, conformément à l'ensemble des indications données précédemment, on a de préférence au moins une, plus préférentiellement toutes les caractéristiques suivantes qui sont vérifiées:
- le taux de charge inorganique renforçante est compris entre 60 et 120 pce ;
- le taux d'agent de couplage est compris entre 4 et 12 pce ;
- le taux de sel métallique est compris entre 1 et 25 pce ;
- le taux d'initiateur radicalaire est compris entre 0,1 et 5 pce ;
- la température maximale de malaxage thermomécanique est comprise entre 145°C et 180°C ;
- la charge inorganique renforçante est une charge siliceuse ou alumineuse ;
- le taux de noir de carbone est inférieur à 20 pce, de préférence compris entre 2 et 15 pce ;
- l'agent de couplage au moins bifonctionnel est un organosilane ou un polyorganosiloxane ;
- le sel métallique d'acide carboxylique est choisi dans le groupe constitué par l'acrylate de zinc, le di-acrylate de zinc, le méthacrylate de zinc, le diméthacrylate de zinc et les mélanges de ces composés ;
- l'initiateur radicalaire est un initiateur radicalaire à amorçage thermique ;
- la quantité d'initiateur radicalaire représente moins de 30% par rapport au poids de sel métallique ;
- l'élastomère diénique est un copolymère de butadiène-styrène (SBR), de préférence utilisé en mélange avec un polybutadiène ;
- la charge inorganique renforçante représente plus de 80% en poids de la charge renforçante totale.

Plus préférentiellement, dans ce procédé, on a au moins une, encore plus préférentiellement toutes les caractéristiques suivantes qui sont vérifiées :
- le taux de charge inorganique est compris entre 70 et 110 pce ;
- le taux d'agent de couplage est compris entre 3 et 8 pce ;
- le taux de sel métallique est compris dans un domaine de 5 à 20 pce ;
- le taux d'initiateur radicalaire est compris dans un domaine de 0,2 à 2,5 pce ;
- la charge inorganique renforçante est de la silice ;
- le taux de noir de carbone est inférieur à 15 pce, de préférence compris entre 4 et 12 pce ;
- l'agent de couplage est un polysulfure de bis-alkoxyl(C₁-C₄)silylpropyle ;
- le sel métallique est le di-acrylate de zinc (ZDA) ou le diméthacrylate de zinc_ (ZDMA), plus préférentiellement encore le ZDMA ;
- l'initiateur radicalaire est un peroxyde organique ;
- la quantité d'initiateur radicalaire représente moins de 20%, de préférence entre 1% et 10% par rapport au poids de sel métallique ;
- l'élastomère diénique est un SBR préparé en solution utilisé en mélange avec un polybutadiène possédant plus de 90% (mol) de liaisons cis-1,4 ;
- la charge inorganique renforçante représentant plus de 90% en poids de la charge renforçante totale.

Bien entendu, l'invention concerne les bandes de roulement précédemment décrites tant à l'état cru (i.e., avant cuisson) qu'à l'état cuit (i.e., après réticulation ou vulcanisation).

### II-8. Propriétés des bandes de roulement

Il est aisément vérifiable que la présence combinée d'un taux élevé de charge renforçante, quel que soit le type de charge utilisée (noir de carbone ou charge inorganique), et de sel métallique d'acide carboxylique insaturé tel que ZDA ou ZDMA s'accompagne, après cuisson des compositions, d'une forte augmentation des modules à faible déformation (les valeurs de MA10 pouvant être par exemple doublées) ainsi que de la dureté Shore A (augmentée par exemple de 10 à 20%).

Une telle augmentation de rigidité, attendue, laissait présager à l'homme du métier, pour des pneumatiques montés sur véhicules automobiles dont les bandes de roulement auraient été constituées de telles compositions, certes une amélioration du comportement routier en raison d'une rigidification et donc d'une poussée de dérive augmentée, mais aussi et surtout une chute rédhibitoire des performances d'adhérence sur sol mouillé, enneigé ou verglacé.

Une telle chute des performances d'adhérence a bien été constatée, en effet, pour des bandes de roulement comparables chargées de noir de carbone, mais pas dans le cas de bandes de roulement selon l'invention ; ces dernières, de manière surprenante, bénéficient du comportement routier amélioré sans pénalisation des performances d'adhérence ci-dessus.

Il faut donc nécessairement en déduire que le réseau résine, dans les compositions de caoutchouc des bandes de roulement, "s'exprime" différemment selon que ces compositions sont chargées conventionnellement de noir de carbone, ou au contraire d'une charge inorganique renforçante telle que de la silice, aux taux élevés préconisés.

Des essais complémentaires ont révélé une propriété inattendue pour les bandes de roulement conformes à l'invention, expliquant a posteriori les différences de comportement ci-dessus.

Ces bandes de roulement, grâce à un phénomène inattendu d'auto-accommodation après roulage, présentent dans la direction radiale, un gradient de rigidité fortement marqué, cette rigidité croissant radialement, selon un profil continu, de la surface vers l'intérieur de la bande de roulement, sur toute l'épaisseur de la bande de roulement ou tout au moins de la portion de bande de roulement hybride, le cas échéant, comportant la composition renforcée de charge inorganique et du sel métallique d'acide carboxylique insaturé, conformément à l'invention. Une telle caractéristique n'existe pas dans le cas d'une bande de roulement témoin renforcée de noir de carbone et de ZDMA.

De l'ensemble des résultats précédents, on peut penser que le réseau tridimensionnel rigidifiant formé par le sel métallique d'acide carboxylique insaturé présente une solidité moindre dans le cas de la bande de roulement chargée de silice que dans celui de la bande de roulement conventionnelle chargée de noir de carbone.

Grâce à cette fragilité relative, des sollicitations de faible amplitude, typiques de celles subies lors du roulage par la partie superficielle de la bande de roulement, seraient suffisantes pour casser le réseau résine de surface, rendre ainsi la partie superficielle de la bande de roulement plus souple, moins rigide, et lui faire recouvrer ainsi les excellentes performances d'adhérence qui sont les siennes en l'absence de sel métallique d'acide carboxylique. Par contre, en profondeur, le réseau résine serait peu affecté par le roulage, d'autant moins que l'on pénètre à l'intérieur de cette bande de roulement, garantissant ainsi la rigidité supplémentaire suffisante pour un comportement routier amélioré (plus forte poussée de dérive).

Ainsi, une fois accommodée (rodée), la bande de roulement conforme à l'invention, souple en surface et rigide en profondeur, concilie les deux exigences contradictoires que sont comportement routier et adhérence sur sol mouillé, enneigé ou verglacé.

Le gradient de rigidité décrit ci-dessus s'illustre notamment par un écart très sensible de module à faible déformation, ou de dureté Shore, entre la partie radialement la plus externe de la bande de roulement, celle au contact du sol, et la partie radialement la plus interne de cette bande de roulement (ou portion de bande de roulement, dans le cas par exemple d'une bande de roulement hybride) rigidifiée par la présence du réseau résine.

Après un rodage standard de pneumatiques tourisme conformes à l'invention, le module sécant MA10 (10% allongement) peut ainsi varier avantageusement du simple au double, entre la surface (typiquement entre 2 et 8 MPa, selon le type de pneumatique) et la partie radialement la plus interne (typiquement entre 4 et 16 MPa, selon le type de pneumatique) de la bande de roulement.

Des mesures comparatives de dureté Shore, réalisées à la surface de bandes de roulement conformes ou non conformes à l'invention, conduisent typiquement aux résultats suivants:
- Charge noir de carbone :
   - sans ZDMA, pneu neuf : entre 60 et 70 points ;
   - avec ZDMA (12pce), pneu neuf: entre 70 et 80 points ;
   - avec ZDMA (12 pce), après rodage standard : entre 70 et 80 points.
- Charge silice:
   - sans ZDMA, pneu neuf: entre 60 et 70 points ;
   - avec ZDMA (12 pce), pneu neuf: entre 70 et 80 points ;
   - avec ZDMA (12 pce), après rodage standard : entre 60 et 70 points.

Le pneumatique conventionnel dont la bande de roulement est renforcée de noir de carbone et ZDMA conserve sa rigidité de surface après rodage, alors que celui dont la bande de roulement est renforcée de silice et ZDMA recouvre son domaine de dureté initiale après rodage, ce qui confirme les évolutions de modules MA10 commentées précédemment.

L'invention permet ainsi, de manière inattendue, de pouvoir moduler les différences de rigidité entre la surface d'une bande de roulement et sa partie radialement interne, et donc d'ajuster le compromis adhérence/comportement routier visé.

Il est désormais possible de produire des pneumatiques à faible résistance au roulement dont la bande de roulement (tout au moins pour la portion de bande de roulement comportant un sel tel que ZDMA dans le cas d'une bande de roulement hybride du type *"cap-base")* présentera un module augmentant radialement selon un profil continu, faible en surface (compris par exemple entre 2 et 8 MPa dans le cas d'un pneumatique tourisme), et élevé en profondeur (compris par exemple entre 8 et 16 MPa dans sa partie radialement la plus interne, pour ce même pneumatique tourisme).

De manière préférentielle, dans le cas d'un pneumatique tourisme conventionnel (été), le module MA10 sera ainsi compris entre 5 et 8 MPa (notamment entre 5,5 et 7,5 MPa) en surface, entre 8 et 14 MPa (notamment entre 9 et 13 MPa) en profondeur (partie radialement la plus interne). De manière préférentielle, dans le cas d'un pneumatique "hiver" destiné aux routes enneigées ou verglacées, le module MA10 sera compris entre 3 et 6 MPa en surface (notamment entre 3,5 et 5,5 MPa), entre 6 et 12 MPa (notamment entre 7 et 11 MPa) en profondeur.

### III. EXEMPLE DE REALISATION

Selon un exemple particulier de fabrication d'une bande de roulement conforme à l'invention, on procède de la manière suivante : on introduit dans un mélangeur interne, rempli à 70% et dont la température initiale de cuve est d'environ 60°C, successivement la charge renforçante (par exemple 80 pce ou plus de silice HDS), l'agent de couplage (par exemple 6 pce ou plus de TESPT), l'élastomère diénique ou le mélange d'élastomères diéniques (par exemple un coupage 70/30 de SBR/BR), le sel métallique d'acide carboxylique insaturé (par exemple 5, 10 ou 20 pce de ZDMA) ainsi que les autres ingrédients (huile d'extension du SBR, noir de carbone à taux faible de 6 pce environ, DPG, ZnO, acide stéarique, antioxydant aux taux usuels), à l'exception du système de vulcanisation (soufre et sulfénamide) et de l'initiateur radicalaire (peroxyde).

On conduit alors un travail thermomécanique (phase non-productive) en une étape, qui dure au total 3 à 4 minutes, jusqu'à atteindre une température maximale de "tombée" de 165°C. On récupère le mélange ainsi obtenu, on le refroidit puis on incorpore soufre (par exemple 1,5 pce), accélérateur sulfénamide (par exemple 1,5 pce) et peroxyde (par exemple 0,1, 0,5 ou 1 pce) sur un mélangeur externe (homo-finisseur) à 30°C, en mélangeant le tout (phase productive) pendant un temps approprié, compris entre 5 et 12 minutes.

La composition ainsi obtenue est ensuite extrudée directement sous la forme d'une bande de roulement de pneumatique tourisme à carcasse radiale, de dimension 195/65 R15 (indice de vitesse H).

Les compositions de caoutchouc précédemment décrites, à base d'élastomère diénique, de charge inorganique renforçante, d'un agent de couplage et d'un sel métallique d'acide carboxylique insaturé tel que ZDMA, dans les proportions indiquées supra, peuvent constituer avantageusement la totalité de la bande de roulement conforme à l'invention.

Mais l'invention s'applique également aux cas où ces compositions de caoutchouc comportant le sel métallique d'acide carboxylique forment une partie seulement d'une bande de roulement composite telle que décrite par exemple en introduction du présent mémoire, constituée d'au moins deux couches radialement superposées de rigidités différentes (structure dite *"cap-base"*), toutes deux destinées à entrer en contact avec la route lors du roulage du pneumatique, au cours de la vie de ce dernier.

La partie comportant le sel métallique d'acide carboxylique pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement, dans les cas où l'on souhaite par exemple "retarder" l'effet technique d'auto-accommodation procuré par l'invention.

Grâce aux bandes de roulement conformes à l'invention et à la formulation spécifique de leurs compositions de caoutchouc, il est désormais possible de "réconcilier" adhérence sur sol mouillé et comportement routier, sans user de solutions complexes, coûteuses ou non pérennes telles que décrites en introduction du présent mémoire.

Les bandes de roulement conformes à l'invention offrent l'avantage majeur, comparées aux bandes de roulement composites de l'art antérieur, d'une part de maintenir leur compromis de performances tout au long de la vie du pneumatique, grâce au phénomène inattendu observé d'auto-accommodation, d'autre part de présenter un véritable gradient de rigidité radial, et non un simple "accident", très localisé, de rigidité. Ce gradient de rigidité véritable conduit à un "travail" optimal des pains de gomme au contact du sol, lors du roulage et des nombreux efforts transmis à la bande de roulement, en d'autres termes est synonyme d'un pneumatique qui s'agrippe encore mieux à la route.

Ce résultat peut être obtenu tout en maintenant les performances de résistance au roulement et de résistance à l'usure aux niveaux élevés que l'on est en droit d'attendre aujourd'hui de compositions de caoutchouc à base dé charges, inorganiques renforçantes telles que des silices hautement dispersibles.

L'invention trouve une application avantageuse dans les pneumatiques équipant des véhicules tels que moto, voiture de tourisme, camionnettes ou Poids-lourd, en particulier dans les pneumatiques à adhérence élevée du type "neige" ou "glace" (encore appelés pneumatiques "hiver") qui, en raison d'une bande de roulement volontairement assouplie; pouvaient' présenter un comportement routier sur sol sec moins performant.

## Revendications

1. Bande de roulement de pneumatique comportant une composition de caoutchouc à base d'au moins (pce = parties en poids pour cent d'élastomère) :
- (i) un élastomère diénique ;
- (ii) plus de 50 pce d'une charge inorganique renforçante ;
- (iii) entre 2 et 15 pce d'un agent de couplage ;
- (iv) un sel métallique d'acide carboxylique insaturé.

2. Bande de roulement selon la revendication 1, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

3. Bande de roulement selon les revendications 1 ou 2, la charge inorganique renforçante étant une charge siliceuse ou alumineuse, de préférence de la silice.

4. Bande de roulement selon l'une quelconque des revendications 1 à 3, la quantité de charge inorganique renforçante étant comprise entre 60 et 120 pce.

5. Bande de roulement selon l'une quelconque des revendications 1 à 4, le sel métallique d'acide carboxylique insaturé étant choisi dans le groupe constitué par l'acrylate de zinc, le di- acrylate de zinc, le méthacrylate de zinc, le diméthacrylate de zinc et les mélanges de ces composés.

6. Bande de roulement selon la revendication 5, le sel métallique d'acide carboxylique insaturé étant le di-acrylate de zinc ("ZDA") ou le diméthacrylate de zinc ("ZDMA").

7. Bande de roulement selon l'une quelconque des revendications 1 à 6, le taux de sel métallique d'acide carboxylique insaturé étant compris entre 1 et 25 pce, de préférence dans un domaine de 5 à 20 pce.

8. Bande de roulement selon l'une quelconque des revendications 1 à 7, la composition de caoutchouc comportant en outre un initiateur radicalaire, de préférence un initiateur radicalaire à amorçage thermique.

9. Bande de roulement selon la revendication 8, l'initiateur radicalaire à amorçage thermique étant un peroxyde organiqueutilisé à un taux compris entre 0,05 et 10 pce, préférentiellement compris entre 0,1 et 5 pce.

10. Bande de roulement selon l'une quelconque des revendications 2 à 9, l'élastomère diénique étant un copolymère de butadiène-styrène (SBR), de préférence un SBR préparé en solution.

11. Bande de roulement selon la revendication 10, l'élastomère SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une température de transition vitreuse comprise entre -20°C et -55°C.

12. Bande de roulement selon les revendications 10 ou 11, le SBR étant utilisé en mélange avec un polybutadiène, le polybutadiène possédant de préférence plus de 90% de liaisons cis-1,4.

13. Bande de roulement selon l'une quelconque des revendications 1 à 12, la charge inorganique renforçante étant utilisée en mélange avec du noir de carbone présent à un taux inférieur à 20 pce, de préférence compris entre 2 et 15 pce.

14. Bande de roulement selon l'une quelconque des revendications 1 à 13, **caractérisée en ce qu'**elle est formée d'au moins deux compositions de caoutchouc différentes radialement superposées, la composition de caoutchouc comportant le sel métallique d'acide carboxylique insaturé formant la partie radialement externe de cette bande de roulement.

15. Bande de roulement selon l'une quelconque des revendications 1 à 13, **caractérisée en ce qu'**elle est formée d'au moins deux compositions de caoutchouc différentes radialement superposées, la composition de caoutchouc comportant le sel métallique d'acide carboxylique insaturé formant la partie radialement interne de cette bande de roulement.

16. Bande de roulement selon l'une quelconque des revendications 1 à 15, **caractérisée en ce qu'**elle se trouve à l'état vulcanisé.

17. Utilisation d'une bande de roulement selon l'une quelconque des revendications 1 à 16, pour la fabrication de pneumatiques neufs ou le rechapage de pneumatiques usagés.

18. Procédé pour préparer une bande de roulement de pneumatique présentant, après cuisson et rodage mécanique du pneumatique la comportant, un gradient de rigidité radialement croissant de la surface vers l'intérieur de la bande de roulement, **caractérisé en ce qu'**il comporte les étapes suivantes :
- incorporer à un élastomère diénique, dans un mélangeur, au cours d'une première étape dite "non-productive" :
• plus de 50 pce d'une charge inorganique renforçante ;
• entre 2 et 15 pce d'un agent de couplage ;
• un sel métallique d'acide carboxylique insaturé, en malaxant thermomécaniquement le tout, en une ou plusieurs fois, jusqu'à atteindre une
température maximale comprise entre 130°C et 200°C ;
- refroidir l'ensemble à une température inférieure à 100°C ;
- incorporer ensuite, au cours d'une seconde étape dite "productive" :
• un système de vulcanisation, auquel est de préférence associé
• un initiateur radicalaire ;
- malaxer le tout jusqu'à une température maximale inférieure à 120°C ;
- extruder ou calandrer la composition de caoutchouc ainsi obtenue, sous la forme d'une bande de roulement de pneumatique.

19. Procédé selon la revendication 18, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

20. Procédé selon les revendications 18 ou 19, la charge inorganique renforçante étant une charge siliceuse ou alumineuse, de préférence de la silice.

21. Procédé selon l'une quelconque des revendications 18 à 20, la quantité de charge inorganique renforçante étant comprise entre 60 et 120 pce.

22. Procédé selon l'une quelconque des revendications 18 à 21, le sel métallique d'acide carboxylique insaturé étant choisi dans le groupe constitué par l'acrylate de zinc, le di-acrylate de zinc, le méthacrylate de zinc, le diméthacrylate de zinc et les mélanges de ces composés.

23. Procédé selon la revendication 22, le sel métallique d'acide carboxylique insaturé étant le di-acrylate de zinc ("ZDA") ou le diméthacrylate de zinc ("ZDMA").

24. Procédé selon l'une quelconque des revendications 18 à 23, le taux de sel métallique d'acide carboxylique insaturé étant compris entre 1 et 25 pce, de préférence dans un domaine de 5 à 20 pce.

25. Procédé selon l'une quelconque des revendications 18 à 24, la composition de caoutchouc comportant en outre un initiateur radicalaire, de préférence un initiateur radicalaire à amorçage thermique.

26. Procédé selon la revendication 25, l'initiateur radicalaire à amorçage thermique étant un peroxyde organique, utilisé à un taux préférentiel compris entre 1 et 5 pce.

27. Pneumatique comportant une bande de roulement conforme à l'une quelconque des revendications 1 à 16.

28. Pneumatique selon la revendication 27 consistant en un pneumatique tourisme, **caractérisé en ce que** sa bande de roulement présente, après vulcanisation et rodage mécanique du pneumatique, un gradient de rigidité radialement croissant de la surface vers l'intérieur de la bande de roulement, le module MA10 (module sécant à 10% d'allongement) de ladite bande de roulement étant en surface compris entre 2 et 8 MPa, dans sa partie radialement la plus interne compris entre 8 et 16 MPa.

29. Pneumatique selon la revendication 28 consistant en un pneumatique tourisme été, le module MA 10 de la bande de roulement étant en surface compris entre 5 et 8 MPa, dans sa partie radialement la plus interne compris entre 8 et 14 MPa.

30. Pneumatique selon la revendication 27 consistant en un pneumatique tourisme hiver, le module MA10 de la bande de roulement étant en surface compris entre 3 et 6 MPa, dans sa partie radialement la plus interne compris entre 6 et 12 MPa.

## Claims

1. A tyre tread comprising a rubber composition based on at least (phr = parts by weight per hundred parts of elastomer):
- (i) a diene elastomer;
- (ii) more than 50 phr of a reinforcing inorganic filler;
- (iii) between 2 and 15 phr of a coupling agent;
- (iv) an unsaturated metal carboxylic acid salt.

2. A tread according to Claim 1, the diene elastomer being selected from the group which consists of polybutadienes, synthetic polyisoprenes, natural rubber, butadiene copolymers, isoprene copolymers and mixtures of these elastomers.

3. A tread according to Claims 1 or 2, the reinforcing inorganic filler being a siliceous or aluminous filler, preferably silica.

4. A tread according to any one of Claims 1 to 3, the quantity of reinforcing inorganic filler being between 60 and 120 phr.

5. A tread according to any one of Claims 1 to 4, the unsaturated metal carboxylic acid salt being selected from among the group consisting of zinc acrylate, zinc diacrylate, zinc methacrylate, zinc dimethacrylate and mixtures of these compounds.

6. A tread according to Claim 5, the unsaturated metal carboxylic acid salt being zinc diacrylate ("ZDA") or zinc dimethacrylate ("ZDMA").

7. A tread according to any one of Claims 1 to 6, the amount of unsaturated metal carboxylic acid salt being between 1 and 25 phr, preferably within a range from 5 to 20 phr.

8. A tread according to any one of Claims 1 to 7, the rubber composition furthermore comprising a radical initiator, preferably a heat-triggered radical initiator.

9. A tread according to Claim 8, the heat-triggered radical initiator being an organic peroxide, used in an amount of between 0.05 and 10 phr, preferably between 0.1 and 5 phr.

10. A tread according to any one of Claims 2 to 9, the diene elastomer being a butadiene/styrene copolymer (SBR), preferably an SBR prepared in solution.

11. A tread according to Claim 10, the SBR elastomer having a styrene content of between 20% and 30% by weight, a content of vinyl bonds of the butadiene fraction of between 15% and 65%, a content of trans-1,4 bonds of between 15% and 75% and a glass transition temperature of between -20°C and -55°C.

12. A tread according to Claims 10 or 11, the SBR being used in a mixture with a polybutadiene, the polybutadiene preferably having more than 90% cis-1,4 bonds.

13. A tread according to any one of Claims 1 to 12, the reinforcing inorganic filler being used in a mixture with carbon black present in an amount less than 20 phr, preferably between 2 and 15 phr.

14. A tread according to any one of Claims 1 to 13, **characterised in that** it is formed of at least two different, radially superposed, rubber compositions, the rubber composition comprising the unsaturated metal carboxylic acid salt forming the radially outer part of this tread.

15. A tread according to any one of Claims 1 to 13, **characterised in that** it is formed of at least two different, radially superposed, rubber compositions, the rubber composition comprising the unsaturated metal carboxylic acid salt forming the radially inner part of this tread.

16. A tread according to any one of Claims 1 to 15, **characterised in that** it is in the vulcanised state.

17. The use of a tread according to any one of Claims 1 to 16 for the manufacture of new tyres or the recapping of worn tyres.

18. A process for preparing a tyre tread having, after curing and mechanical running-in of the tyre comprising it, a rigidity gradient which increases radially from the surface towards the inside of the tread, **characterised in that** it comprises the following steps:
- incorporating in a diene elastomer, in a mixer, during a first step referred to as "non-productive":
• more than 50 phr of a reinforcing inorganic filler;
• between 2 and 15 phr of a coupling agent;
• an unsaturated metal carboxylic acid salt, by thermomechanically kneading the entire mixture, in one or more stages, until a maximum temperature of between 130°C and 200°C is reached;
- cooling the entire mixture to a temperature of less than 100°C;
- then incorporating, during a second step referred to as "productive":
• a vulcanisation system, with which there is preferably associated
• a radical initiator;
- kneading the entire mixture until a maximum temperature less than 120°C is reached;
- extruding or calendering the rubber composition thus obtained, in the form of a tyre tread.

19. A process according to Claim 18, the diene elastomer being selected from among the group consisting of polybutadienes, synthetic polyisoprenes, natural rubber, butadiene copolymers, isoprene copolymers and mixtures of these elastomers.

20. A process according to Claims 18 or 19, the reinforcing inorganic filler being a siliceous or aluminous filler, preferably silica.

21. A process according to any one of Claims 18 to 20, the quantity of reinforcing inorganic filler being between 60 and 120 phr.

22. A process according to any one of Claims 18 to 21, the unsaturated metal carboxylic acid salt being selected from among the group consisting of zinc acrylate, zinc diacrylate, zinc methacrylate, zinc dimethacrylate and mixtures of these compounds.

23. A process according to Claim 22, the unsaturated metal carboxylic acid salt being zinc diacrylate ("ZDA") or zinc dimethacrylate ("ZDMA").

24. A process according to any one of Claims 18 to 23, the amount of unsaturated metal carboxylic acid salt being between 1 and 25 phr, preferably within a range from 5 to 20 phr.

25. A process according to any one of Claims 18 to 24, the rubber composition furthermore comprising a radical initiator, preferably a heat-triggered radical initiator.

26. A process according to Claim 25, the heat-triggered radical initiator being an organic peroxide, used in a preferred amount of between 1 and 5 phr.

27. A tyre comprising a tread according to any one of Claims 1 to 16.

28. A tyre according to Claim 27, consisting of a passenger-car tyre, **characterised in that** its tread has, after vulcanisation and mechanical running-in of the tyre, a rigidity gradient which increases radially from the surface towards the inside of the tread, the modulus ME10 (secant modulus at 10% elongation) of said tread being of between 2 and 8 MPa at the surface, and of between 8 and 16 MPa in its radially innermost part.

29. A tyre according to Claim 28, consisting of a summer passenger-car tyre, the modulus ME10 of the tread being of between 5 and 8 MPa at the surface, and of between 8 and 14 MPa in its radially innermost part.

30. A tyre according to Claim 28, consisting of a winter passenger-car tyre, the modulus ME10 of the tread being of between 3 and 6 MPa at the surface, and of between 6 and 12 MPa in its radially innermost part.

## Patentansprüche

1. Laufstreifen für Luftreifen, der eine Kautschukmischung auf der Basis zumindest der folgenden Bestandteile enthält (pce = Gewichtsteile auf 100 Teile Elastomer):
- (i) ein Dienelastomer;
- (ii) mehr als 50 pce eines anorganischen verstärkenden Füllstoffs;
- (iii) 2 bis 15 pce Kupplungsmittel;
- (iv) ein Metallsalz einer ungesättigten Carbonsäure.

2. Laufstreifen nach Anspruch 1, wobei das Dienelastomer unter den Polybutadienen, synthetischen Polyisoprenen, Naturkautschuk, Butadien-Copolymeren, Isopren-Copolymeren und Gemischen dieser Elastomere ausgewählt ist.

3. Laufstreifen nach den Ansprüchen 1 oder 2, wobei der anorganische verstärkende Füllstoff ein Füllstoff auf Kieselsäurebasis oder Aluminiumoxidbasis und vorzugsweise Kieselsäure ist.

4. Laufstreifen nach einem der Ansprüche 1 bis 3, wobei der Mengenanteil des verstärkenden anorganischen Füllstoffs im Bereich von 60 bis 120 pce liegt.

5. Laufstreifen nach einem der Ansprüche 1 bis 4, wobei das Metallsalz einer ungesättigten Carbonsäure unter Zinkacrylat, Zinkdiacrylat, Zinkmethacrylat, Zinkdimethacrylat und den Gemischen dieser Verbindungen ausgewählt ist.

6. Laufstreifen nach Anspruch 5, wobei das Metallsalz der ungesättigten Carbonsäure das Zinkdiacrylat ("ZDA") oder das Zinkdimethacrylat ("ZDMA") ist.

7. Laufstreifen nach einem der Ansprüche 1 bis 6, wobei der Mengenanteil des Metallsalzes der ungesättigten Carbonsäure im Bereich von 1 bis 25 pce und vorzugsweise im Bereich von 5 bis 20 pce liegt.

8. Laufstreifen nach einem der Ansprüche 1 bis 7, wobei die Kautschukmischung ferner einen Radikalstarter und vorzugsweise einen Radikalstarter mit thermischer Initiierung enthält.

9. Laufstreifen nach Anspruch 8, wobei der Radikalstarter mit thermischer Initiierung ein organisches Peroxid ist, das in einer Menge von 0,05 bis 10 pce und vorzugsweise 0,1 bis 5 pce verwendet wird.

10. Laufstreifen nach einem der Ansprüche 2 bis 9, wobei das Dienelastomer ein Butadien-Styrol-Copolymer (SBR) und vorzugsweise ein in Lösung hergestellter SBR ist.

11. Laufstreifen nach Anspruch 10, wobei das SBR-Elastomer einen Styrolgehalt von 20 bis 30 Gew.-%, einen Gehalt an Vinylbindungen des Butadienteils von 15 bis 65 %, einen Gehalt an trans-1,4-Bindungen von 15 bis 75 % und eine Glasübergangstemperatur von -20 bis -55 °C besitzt.

12. Laufstreifen nach den Ansprüchen 10 oder 11, wobei der SBR im Gemisch mit Polybutadien verwendet wird, wobei das Polybutadien vorzugsweise mehr als 90 % cis-1, 4-Bindungen aufweist.

13. Laufstreifen nach einem der Ansprüche 1 bis 12, wobei der anorganische verstärkende Füllstoff im Gemisch mit Ruß verwendet wird, der in einem Mengenanteil unter 20 pce und vorzugsweise im Bereich von 2 bis 15 pce enthalten ist.

14. Laufstreifen nach einem der Ansprüche 1 bis 13, **dadurch gekennzeichnet, dass** er aus mindestens zwei unterschiedlichen, in radialer Richtung übereinander liegenden Kautschukmischungen gebildet wird, wobei die Kautschukmischung, die das Metallsalz der ungesättigten Carbonsäure enthält, den radial äußeren Bereich des Laufstreifens bildet.

15. Laufstreifen nach einem der Ansprüche 1 bis 13, **dadurch gekennzeichnet, dass** er aus mindestens zwei unterschiedlichen, in radialer Richtung übereinander liegenden Kautschukmischungen gebildet wird, wobei die Kautschukmischung, die das Metallsalz der ungesättigten Carbonsäure enthält, den radial inneren Bereich des Laufstreifens bildet.

16. Laufstreifen nach einem der Ansprüche 1 bis 15, **dadurch gekennzeichnet, dass** er im vulkanisierten Zustand vorliegt.

17. Verwendung eines Laufstreifens nach einem der Ansprüche 1 bis 16 für die Herstellung von Neureifen oder für die Runderneuerung von gebrauchten Reifen.

18. Verfahren zur Herstellung eines Laufstreifens für Luftreifen, der nach der Vulkanisation und dem mechanischen Einfahren des Luftreifens, der ihn enthält, einen radial von der Oberfläche des Laufstreifens nach innen ansteigenden Steifigkeitsgradienten aufweist, **dadurch gekennzeichnet, dass** es die folgenden Schritte umfasst:
- Einbringen der folgenden Verbindungen in ein Dienelastomer in einem Mischer während einer ersten, so genannten "nicht produktiven" Phase:
. mehr als 50 pce eines verstärkenden anorganischen Füllstoffs;
. bis 15 pce Kupplungsmittel;
. ein Metallsalz einer ungesättigten Carbonsäure,
- thermomechanische Bearbeitung des Ganzen in einem oder mehreren Schritten, bis eine maximale Temperatur von 130 bis 200 °C erreicht ist;
- Abkühlen der Mischung auf eine Temperatur unter 100 °C;
- anschließend Einbringen während eines zweiten, so genannten "produktiven" Schritts:
. ein Vulkanisationssystem, vorzugsweise in Kombination mit
. einem Radikalstarter;
- Kneten des Ganzen bis zu einer maximalen Temperatur unter 120°C;
- Extrudieren oder Kalandrieren der auf diese Weise erhaltenen Kautschukmischung in Form eines Luftreifenlaufstreifens.

19. Verfahren nach Anspruch 18, wobei das Dienelastomer unter den Polybutadienen, synthetischen Polyisoprenen, Naturkautschuk, Butadien-Copolymeren, Isopren-Copolymeren und Gemischen dieser Elastomere ausgewählt ist.

20. Verfahren nach Anspruch 18 oder 19, wobei der anorganische verstärkende Füllstoff ein Füllstoff auf Kieselsäurebasis oder Aluminiumoxidbasis und vorzugsweise Kieselsäure ist.

21. Verfahren nach einem der Ansprüche 18 bis 20, wobei der Mengenanteil des anorganischen verstärkenden Füllstoffs im Bereich von 60 bis 120 pce liegt.

22. Verfahren nach einem der Ansprüche 18 bis 21, wobei das Metallsalz einer ungesättigten Carbonsäure unter Zinkacrylat, Zinkdiacrylat, Zinkmethacrylat, Zinkdimethacrylat und den Gemischen dieser Verbindungen ausgewählt ist.

23. Verfahren nach Anspruch 22, wobei das Metallsalz einer ungesättigten Carbonsäure das Zinkdiacrylat ("ZDA") oder das Zinkdimethacrylat ("ZDMA") ist.

24. Verfahren nach einem der Ansprüche 18 bis 23, wobei der Mengenanteil des Metallsalzes einer ungesättigten Carbonsäure im Bereich von 1 bis 25 pce und vorzugsweise 5 bis 20 pce liegt.

25. Verfahren nach einem der Ansprüche 18 bis 24, wobei die Kautschukmischung ferner einen Radikalstarter und vorzugsweise einen Radialstarter mit thermischer Initiierung enthält.

26. Verfahren nach Anspruch 25, wobei der Radikalstarter mit thermischer Initiierung ein organisches Peroxid ist, das in einem bevorzugten Mengenanteil von 1 bis 5 pce verwendet wird.

27. Luftreifen, der einen Laufstreifen nach einem der Ansprüche 1 bis 16 enthält.

28. Luftreifen nach Anspruch 27, der ein Personenkraftwagenreifen ist, **dadurch gekennzeichnet, dass** sein Laufstreifen nach der Vulkanisation und dem mechanischen Einfahren des Luftreifens einen in radialer Richtung von der Oberfläche des Laufstreifens nach innen ansteigenden Steifigkeitsgradienten aufweist, wobei der Modul MA10 (Sekantenmodul bei 10 % Dehnung) des Laufstreifens an der Oberfläche im Bereich von 2 bis 8 MPa und in seinem radial am weitesten innen liegenden Teil im Bereich von 8 bis 16 MPa liegt.

29. Luftreifen nach Anspruch 28, bei dem es sich um einen Sommerreifen für Personenkraftwagen handelt, wobei der Modul MA10 des Laufstreifens an der Oberfläche im Bereich von 5 bis 8 MPa und in dem radial am weitesten innen liegenden Bereich im Bereich von 8 bis 14 MPa liegt.

30. Luftreifen nach Anspruch 27, bei dem es sich um einen Winterreifen für Personenkraftwagen handelt, wobei der Modul MA10 des Laufstreifens an der Oberfläche im Bereich von 3 bis 6 MPa und in dem radial am weitesten innen liegenden Bereich im Bereich von 6 bis 12 MPa liegt.
